# EUROPEAN PATENT SPECIFICATION

(11) **EP 1 656 055 B1**
(45) Date of publication and mention of the grant of the patent: **09.04.2008**
(21) Application number: 04775029.4
(22) Date of filing: 13.08.2004
(51) Int. Cl.: A47G 21/18, F16K 15/14

(54) **A DEVICE FOR UNDERPRESSURE-ACTIVATED DISPENSING OF FLUIDS**
VORRICHTUNG FÜR DIE UNTERDRUCKAKTIVIERTE AUSGABE VON FLUIDEN
DISPOSITIF DE DISTRIBUTION ACTIVEE SOUS PRESSION DE FLUIDES

(30) Priority: 18.08.2003 NO 20033657
(43) Date of publication of application: 17.05.2006
(73) Proprietor: Smartseal AS, 4314 Sandnes (NO)
(72) Inventor: NAESJE, Kjetil, N-4314 Sandnes (NO)
(74) Representative: Hedley, Nicholas James Matthew
(86) International application number: PCT/NO2004/000245
(87) International publication number: WO 2005/016084

(56) References cited:
- US-A- 3 705 601
- US-A- 4 850 533
- US-A- 4 971 048
- US-A1- 2002 189 683
- US-A1- 2003 029 503
- US-A1- 2003 071 136

## Description

The present invention regards an underpressure-activated valve mechanism for controlled dispensing of fluids, including liquid food articles, from a receptacle. When the user applies sufficient suction force P2 across a pressure comparative diaphragm zone a valve opening force is applied to a valve area that has a force connection with the diaphragm zone. When the suction force ceases the valve area closes and remains closed, even in the event of overpressure P3 in the receptacle.

The patent literature describes a number of devices that seek to achieve underpressure-activated dispensing of fluids from a receptacle. Norwegian patent application no. 2002-5957 provides an example: Here, during activation, a valve actuating force arises as a result of a pressure differential across a diaphragm. The force is here transferred to a valve in the form of rotation and/or axial motion. A device utilizing this principle must consist of at least two parts capable of relative motion with respect to each other. There are also other devices where opening and closing occurs by mechanical movement, but these devices will not be able to provide automatic opening and closing of the valve, which may lead to inadvertent dispensing (spillage). A further device is disclosed in US-A-2003 0029503. All the above devices are complex and so can be expected to be relatively costly.

The object of the present invention is to remedy the disadvantages of prior art. The object is achieved by the characteristics stated in the description below and in the following claims.

According to the invention the object is achieved by replacing the prior art valve with an elongated valve zone that has a force exchange connection with an elongated diaphragm zone. The diaphragm zone can be part of the outer pipe, as can the valve zone. With this it becomes possible to extrude the entire device in one piece without using particularly advanced technology.

The present invention comprises said pipe, wherein one or more axial diaphragm zones and one or more axial valve zones are formed in the longitudinal direction of the pipe. The principal differentiation is between using the inner or outer valve zone, although technically the invention may be constructed in different ways and with a combination of these methods. It is possible then to use several valve zones and/or diaphragm zones and connected partitions, but for simplicity these will hereinafter be referred to only in the singular form.

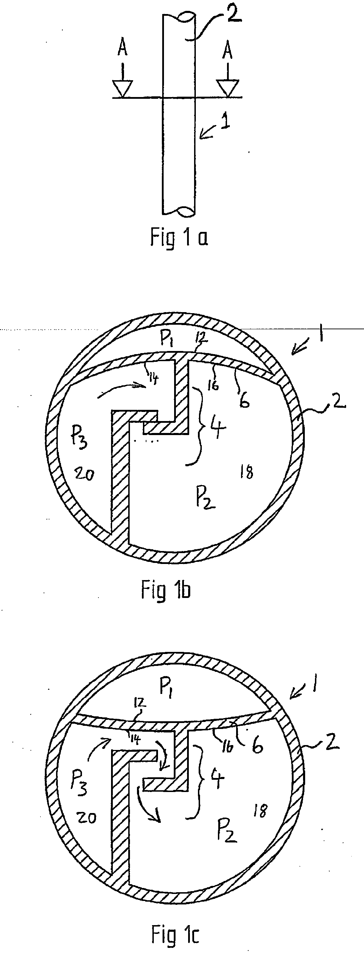

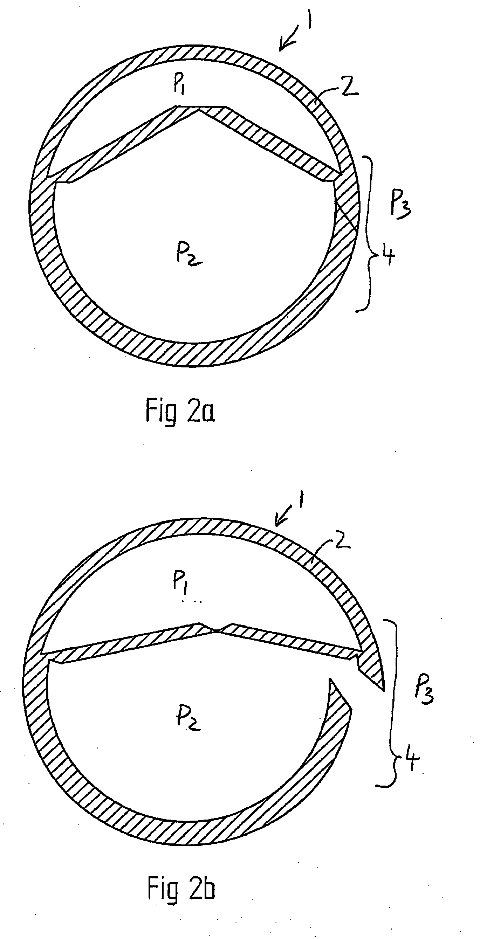

When using an inner valve zone the outer pipe will form a sealing zone and also provide protection against deformation of the inner parts, which in this case are the valve zone and the diaphragm zone. Seen from one end, as in figure 1, the pipe includes the following zones: Zone 1 (P1) is separated in a pressure tight manner from the other zones, and communicates with atmospheric pressure P1 or another pressure reference. During consumption, zone 2(P2) communicates with the user in a pressure tight manner, forming the flow channel for fluids that have passed the valve zone. Zone 3 (P3) communicates with the fluid in the receptacle, forming the entrance area for the fluid prior to passing the valve zone. When using an outer valve zone, the valve zone, and therefore also zone 3 (P3), is moved to the outside of the outer pipe (see figure 2).

If the invention is to be formed as a straw, the lower open end of the pipe can be closed to flow while at the same time being formed as a point, making it easier to place the straw into a suitable receptacle. The other end can be welded or otherwise processed to ensure that the valve zone above the liquid can no longer be opened. At the same time, the reference pressure zone (P3) of the diaphragm zone can be sealed at the upper end of the pipe and provided with a vent placed e.g. on the upper sidewall of the pipe, which ensures aeration from the atmosphere to the reference pressure area.

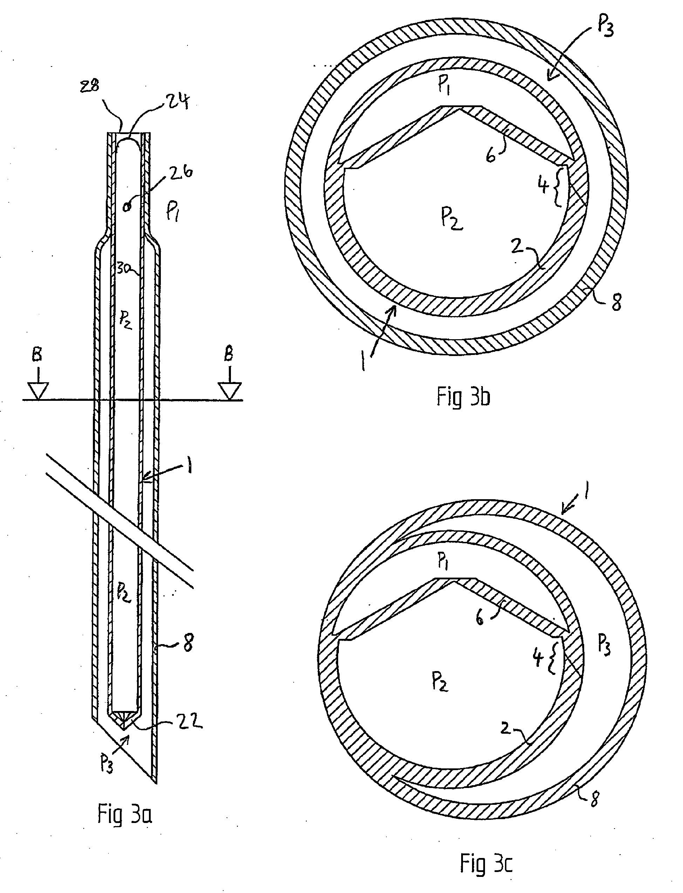

The outer pipe described so far can also be provided with a new outer pipe or a profile connected with the rest of the mechanism in a pressure tight manner, making it easier to lead fluids through the valve zone without sucking in additional air if the device is used with a rigid receptacle (see figure 3). The extra profile may be part of the same pipe as previously described, or it may be a self-contained pipe or other profile shape permanently or slidingly fixed to the above mentioned pipe. When fixed in a sliding manner it is possible to achieve a telescope function, which is an advantage if attached to low packing during transport.

Advantageously the outer pipe and its internal components are formed wholly or in part from different materials or different combinations of materials. It may be advantageous to use a rigid material for the external physical protection, while soft materials may be beneficial where the valve faces meet, in order to ensure reliable closing. Apart from this, the selection of materials is not important to the fundamental operation, which constitutes the actual invention, and as such may be carried out by a person skilled in plastics technology.

In some instances it may be advantageous for the entire device to be manufactured with rotation in the longitudinal direction. This will, among other things, provide greater strength and thereby increased tolerance to damage caused by bending or compression.

The outer pipe may also take other spatial forms than the purely circular. In these cases the outer pipe may be called a profile, with the unlimited number of styles of execution that entails.

The following describes several non-limiting examples of embodiments according to the invention. These have been illustrated in the accompanying drawings, in which figures 1- 4 show examples of embodiments according to the invention:
Figure 1a shows a part of a tubular profile 2 according to the invention;
Figures 1b and 1c show section A-A of the above profile 2, figure 1b showing the device in the closed state and figure 1c showing the device in the open state. The valve zone 4 communicates with the diaphragm zone 6, which through the atmospheric pressure P1 represented at the back 12 of the diaphragm zone 6 effects opening of the valve zone 4 when the user applies sufficient underpressure P2 in the passage 18. Upon opening of the valve zone 4 fluids will flow through the feed passage 20. When the underpressure P2 from the user ceases the valve opening force from the diaphragm zone 6 will cease, causing the valve zone 4 to be closed by the bias in the diaphragm zone 6;
Figures 2a and 2b show a section through an alternative execution of a profile according to the invention. Here the valve area 4 has a direction of opening directly out to the fluid in the receptacle. Otherwise, the principle of operation is the same as in figures 1a and 1b;
Figure 3a shows a further execution according to the invention, which has been cut through to show that the inner pipe 1 is provided with an outer pipe 8, which helps carry the fluid to the valve zone 6. The inner pipe 1 is closed at the lower end 22, ensuring that fluid can only pass through the valve zone 6 upon use of activating suction force P2. At the upper end 28 of the pipe 1 the diaphragm zone is welded to the inside wall 30 of the pipe 1, ensuring that atmospheric pressure can only pass through the hole 26;
Figure 3b shows the same device as that described above, but seen from section B-B; and
Figure 3c shows an alternative execution of a profile according to the invention. Here the outer and inner pipes are manufactured from the same profile, but otherwise the operation remains the same as in figure 3a.

## Claims

1. A device for preventing inadvertent outflow of fluids from a receptacle when connected thereto, **characterized in that**
the device comprises a pipe (2) containing at least one elongated diaphragm zone (6) and at least one elongated valve zone (4), the zones (4, 6) being formed in the longitudinal direction of the pipe (2),
said valve zone (4) has a force connection with said diaphragm zone (6) for allowing the valve zone (4) to communicate in a force transferring manner with the diaphragm zone (6),
the valve zone (4) is configured to be activated by applying suction force (P2 < P1) across the diaphragm zone (6), thereby opening for fluid flow through the valve zone (4) and
the valve zone (4) is configured to close and remain closed when said suction force ceases.

2. A device according to Claim 1, **characterised in that** the valve zone (4) is continuous in the longitudinal direction of the pipe (2).

3. A device according to claim 1 or claim 2, **characterised in that** an outer pipe (8) is connected to the pipe (2).

4. A device according to claim 3, **characterised in that** the outer pipe (8) is permanently connected to the inner pipe (2).

5. A device according to claim 3, **characterized in that** the outer pipe (8) is telescopically connected to the inner pipe (2).

6. A device according to any one of claims 3 to 5, **characterised in that** the outer pipe (8) and its internal components are formed wholly or in part from different materials or different combinations of materials.

7. The device according to any one of claims 1-6, **characterized in that** rigid material is used for external physical protection of the device.

8. The device according to any one of claims 1-7, **characterized in that** valve faces of the valve zone (4) are formed from soft material in order to ensure reliable closing of the valve zone (4).

9. The device according to any one of claims 1-8, **characterized in that** the valve zone (4) is arranged to close and remain closed in the event of overpressure in the pressure (P3) of the receptacle.

10. The device according to claim 1, **characterized in that** the device is extruded in one piece.

## Patentansprüche

1. Vorrichtung zum Verhindern von unbeabsichtigtem Austreten von Fluiden aus einer Aufnahme, wenn sie mit dieser verbunden ist, **dadurch gekennzeichnet, dass**
die Vorrichtung eine Röhre (2) aufweist, die mindestens eine längliche Membranzone (6) und mindestens eine längliche Ventilzone (4) enthält, die in Längsrichtung der Rohre (2) ausgebildet sind,
die Ventilzone (4) eine Kraftkopplung mit der Membranzone (6) aufweist, so dass sie mit dieser auf kraftübertragende Weise in Verbindung stehen kann,
die Ventilzone (4) eingerichtet ist, durch Anlegen einer Saugkraft (P2<P1) über der Membranzone (6) aktiviert zu werden, wodurch sie für eine Fluidströmung durch die Ventilzone (4) öffnet, und
die Ventilzone (4) eingerichtet ist, zu schließen und geschlossen zu bleiben, wenn die Saugkraft aufhört.

2. Vorrichtung nach Anspruch 1, **dadurch gekennzeichnet, dass** die Ventilzone (4) in Längsrichtung der Röhre (2) zusammenhängend ist.

3. Vorrichtung nach Anspruch 1 oder 2, **dadurch gekennzeichnet, dass** mit der Röhre (2) eine Außenröhre (8) verbunden ist.

4. Vorrichtung nach Anspruch 3, **dadurch gekennzeichnet, dass** die Außenröhre (8) mit der inneren Röhre (2) dauerhaft verbunden ist.

5. Vorrichtung nach Anspruch 3, **dadurch gekennzeichnet, dass** die Außenröhre (8) mit der inneren Röhre (2) teleskopartig verbunden ist.

6. Vorrichtung nach einem der Ansprüche 3 bis 5, **dadurch gekennzeichnet, dass** die Außenröhre (8) und ihre inneren Bestandteile insgesamt oder teilweise aus verschiedenen Materialien oder verschiedenen Materialkombinationen gebildet sind.

7. Vorrichtung nach einem der Ansprüche 1 bis 6, **dadurch gekennzeichnet, dass** zu ihrem äußeren physikalischen Schutz ein starres Material verwendet ist.

8. Vorrichtung nach einem der Ansprüche 1 bis 7, **dadurch gekennzeichnet, dass** Ventilflächen der Ventilzone (4) aus weichem Material gebildet sind, um ein verlässliches Schließen der Ventilzone (4) sicherzustellen.

9. Vorrichtung nach einem der Ansprüche 1 bis 8, **dadurch gekennzeichnet, dass** die Ventilzone (4) eingerichtet ist, bei Überdruck des Drucks (P3) der Aufnahme zu schließen und geschlossen zu bleiben.

10. Vorrichtung nach Anspruch 1, **dadurch gekennzeichnet, dass** die Vorrichtung einstückig extrudiert ist.

## Revendications

1. Dispositif pour empêcher l'écoulement de sortie par inadvertance des fluides d'un réceptacle lorsqu'ils sont raccordés à celui-ci, **caractérisé en ce que** :
le dispositif comprend un tuyau (2) contenant au moins une zone de diaphragme allongée (6) et au moins une zone de soupape allongée (4), les zones (4, 6) étant formées dans la direction longitudinale du tuyau (2),
ladite zone de soupape (4) a un raccordement de force avec ladite zone de diaphragme (6) pour permettre à la zone de soupape (4) de communiquer à la manière d'un transfert de force avec la zone de diaphragme (6),
la zone de soupape (4) est configurée pour être activée en appliquant une force d'aspiration (P2 < P1) sur la zone de diaphragme (6), ouvrant ainsi l'écoulement de fluide par la zone de soupape (4), et
la zone de soupape (4) est configurée pour fermer et rester fermée lorsque ladite force d'aspiration cesse.

2. Dispositif selon la revendication 1, **caractérisé en ce que** la zone de soupape (4) est continue dans la direction longitudinale du tuyau (2).

3. Dispositif selon la revendication 1 ou la revendication 2, **caractérisé en ce qu'**un tuyau externe (8) est raccordé au tuyau (2).

4. Dispositif selon la revendication 3, **caractérisé en ce que** le tuyau externe (8) est raccordé de manière permanente au tuyau interne (2).

5. Dispositif selon la revendication 3, **caractérisé en ce que** le tuyau externe (8) est raccordé de manière télescopique au tuyau interne (2).

6. Dispositif selon l'une quelconque des revendications 3 à 5, **caractérisé en ce que** le tuyau externe (8) et ses composants internes sont formés totalement ou en partie à partir de matériaux différents ou de combinaisons différentes de matériaux.

7. Dispositif selon l'une quelconque des revendications 1 à 6, **caractérisé en ce que** le matériau rigide est utilisé pour la protection physique externe du dispositif.

8. Dispositif selon l'une quelconque des revendications 1 à 7, **caractérisé en ce que** les faces de soupape de la zone de soupape (4) sont formées à partir de matériau souple afin de garantir la fermeture fiable de la zone de soupape (4).

9. Dispositif selon l'une quelconque des revendications 1 à 8, **caractérisé en ce que** la zone de soupape (4) est agencée pour fermer et rester fermée en cas de surpression de la pression (P3) du réceptacle.

10. Dispositif selon la revendication 1, **caractérisé en ce que** le dispositif est extrudé d'un seul tenant.
